(19) Europäisches Patentamt / European Patent Office / Office européen des brevets

(11) **EP 1 767 913 B1**

(12) **FASCICULE DE BREVET EUROPEEN**

(45) Date de publication et mention
de la délivrance du brevet:
**18.05.2011 Bulletin 2011/20**

(51) Int Cl.:
***G01J 5/12*** *(2006.01)* ***G01K 7/02*** *(2006.01)*

(21) Numéro de dépôt: **05370028.2**

(22) Date de dépôt: **22.09.2005**

(54) **Microcapteur de flux thermique sur substrat conducteur avec caisson(s) poreux**

Mikrosensor für thermischen Fluss auf einem leitenden Substrat mit porösen Fächer

Microsensor for thermal flux on a conducting substrate with porous sections

(84) Etats contractants désignés:
**AT BE BG CH CY CZ DE DK EE ES FI FR GB GR HU IE IS IT LI LT LU LV MC NL PL PT RO SE SI SK TR**

(43) Date de publication de la demande:
**28.03.2007 Bulletin 2007/13**

(73) Titulaires:
• **UNIVERSITE LILLE-I - Sciences et Technologies**
**59655 Villeneuve d'Ascq cedex (FR)**
• **Centre National de la Recherche Scientifique**
**75794 Paris Cedex 16 (FR)**

(72) Inventeurs:
• **Ziouche, Katir**
**62970 Courcelles les Lens (FR)**
• **Godts, Pascale**
**59650 Villeneuve D'ascq (FR)**
• **Leclercq, Didier**
**59000 Lille (FR)**

(74) Mandataire: **Matkowska, Franck et al**
**Matkowska & Associés**
**9, rue Jacques Prévert**
**59650 Villeneuve d'Ascq (FR)**

(56) Documents cités:
**FR-A- 2 781 931**

• **NASSIOPOULOU A G ET AL: "POROUS SILICON AS AN EFFECTIVE MATERIAL FOR THERMAL ISOLATION ON BULK CRYSTALLINE SILICON" PHYSICA STATUS SOLIDI (A). APPLIED RESEARCH, BERLIN, DE, vol. 182, no. 1, 12 mars 2000 (2000-03-12), pages 307-311, XP008001587 ISSN: 0031-8965**
• **KALTSAS G ET AL: "Novel C-MOS compatible monolithic silicon gas flow sensor with porous silicon thermal isolation" SENSORS AND ACTUATORS A, ELSEVIER SEQUOIA S.A., LAUSANNE, CH, vol. 76, no. 1-3, 30 août 1999 (1999-08-30), pages 133-138, XP004184426 ISSN: 0924-4247**

EP 1 767 913 B1

**Description**

**Domaine technique**

La présente invention concerne le domaine des microcapteurs qui permettent la mesure de flux thermiques et qui comportent une paroi collectrice du flux thermique, un substrat de type silicium thermiquement conducteur et formant un puits thermique de référence, et une thermopile planaire à thermojonctions distribuées qui est interposée entre la paroi collectrice et le substrat. En fonction notamment de la structure de son substrat et de sa paroi collectrice, le microcapteur de flux thermique de l'invention peut être utilisé pour la mesure d'un flux thermique total (flux thermique collecté par conduction, convection et rayonnement) ou pour la mesure d'un flux thermique radiatif, et en particulier pour la mesure d'un rayonnement infrarouge, UV, ... Les microcapteurs de l'invention peuvent par exemple, et de manière non exhaustive et non limitative de l'invention, être utilisés pour la détection de présence humaine par contact, pour réaliser des commutateurs actionnés par la chaleur et notamment des commutateurs sans contact actionnés par la chaleur humaine, pour la mesure de flux de chaleur latente d'évaporation, pour la détection d'échauffements anormaux dans tout type d'applications, pour la mesure de flux thermiques dans des conditions de pressions importantes, et notamment pour la caractérisation d'explosifs, pour la mesure de flux thermiques dans des applications à haute température supérieure à 150°C et pouvant notamment atteindre 800°C.

**Art antérieur**

Des fluxmètres pour la mesure d'un flux thermique total ou pour la mesure uniquement d'un rayonnement, notamment un rayonnement infrarouge, et comportant la structure générale précitée (paroi collectrice/ thermopile planaire /substrat de référence) ont été décrits dans la demande de brevet français FR 2 781 931.

Il est brièvement rappelé qu'une thermopile comprend de manière usuelle une pluralité de thermocouples successifs connectés en série, chaque thermocouple étant constitué par deux thermoéléments présentant des propriétés thermoélectriques différentes. La jonction entre deux thermoéléments constitutifs d'un thermocouple est appelée « thermojonction ». Une thermopile a pour fonction de convertir les gradients de températures créés entre ses thermojonctions chaudes et ses thermojonctions froides en un signal électrique à ses bornes, dont l'origine est l'effet thermoélectrique Seebeck. La tension électrique aux bornes de la thermopile est proportionnelle au nombre de thermocouples associés en série et au gradient global de température généré.

Dans les fluxmètres décrits dans la demande de brevet français FR 2 781 931, la thermopile mise en oeuvre est plus particulièrement une thermopile planaire à thermojonctions distribuées, c'est-à-dire une thermopile dont les thermojonctions chaudes et froides sont dispersées sur même plan et ne sont pas séparées en deux groupes distincts. Le substrat est réalisé dans un matériau thermiquement conducteur, et est de préférence un substrat en silicium. Dans le but de réaliser localement au niveau d'une thermojonction une déviation et constriction des lignes de flux thermique, on réalise en outre dans le substrat au droit de ladite thermojonction, une zone de discontinuité thermique de plus faible conductivité thermique. Plus particulièrement chaque zone de discontinuité thermique est réalisée sous la forme d'une cavité vide creusée dans l'épaisseur du substrat. Lorsque le microcapteur est un capteur de flux thermique total, on réalise dans le substrat une cavité au droit uniquement des thermojonctions chaudes. En revanche, lorsque microcapteur est un capteur de rayonnement (par exemple capteur de rayonnement infrarouge), on réalise dans le substrat une cavité au droit de chaque thermojonction.

Dans les microcapteurs de flux thermiques décrits dans la publication précitée FR 2 781 931, l'effet de déviation et de constriction des lignes de flux thermique, qui est obtenu au moyen des cavités creusées dans le substrat, permet avantageusement de réaliser un microcapteur comportant un substrat de type silicium, thermiquement conducteur, tout en obtenant une très bonne sensibilité de mesure. La constriction dans le substrat conducteur des lignes de flux thermique permet en effet de maintenir un gradient de température entre les thermojonctions malgré la conductivité thermique du substrat.

Les microcapteurs de flux thermique décrits dans la demande de brevet français FR 2 781 931 présentent plusieurs avantages mentionnés dans cette publication, dont une très bonne sensibilité de la mesure de flux thermique découlant de la structure distribuée des thermojonctions de la thermopile.

Les microcapteurs de flux thermique décrits dans la demande de brevet français FR 2 781 931 présentent toutefois plusieurs inconvénients.

Un premier inconvénient réside dans la complexité de la réalisation des cavités dans le substrat, qui nécessite des étapes de gravures très délicates, difficiles à contrôler et à l'origine d'une dispersion des caractéristiques des microcapteurs produits à une échelle industrielle. Cette complexité nuit en outre au rendement et au coût de fabrication des microcapteurs.

Un deuxième inconvénient est la faible résistance en température et/ou la fragilité mécanique des microcapteurs, du fait des membranes de faible épaisseur au droit des cavités dans le substrat. Typiquement, les microcapteurs décrits dans la demande de brevet français FR 2 781 931 ne peuvent être utilisés dans des plages de températures excédant 150°C.

### Objectif de l'invention

L'invention vise à proposer un nouveau microcapteur de flux thermique qui conserve les avantages des microcapteurs de flux thermique décrits dans la demande de brevet français FR 2 781 931, mais qui en pallie les inconvénients précités. En particulier, l'invention a pour objectif de proposer un nouveau microcapteur qui permet de mesurer un flux thermique avec une très bonne sensibilité et une très bonne précision, qui est robuste mécaniquement et peut fonctionner le cas échéant à des températures élevées, et dont le procédé de fabrication est plus simple que celui des capteurs de la demande de brevet français FR 2 781 931 et permet une meilleure reproductibilité.

### Résumé de l'invention

L'objectif précité est atteint par le microcapteur de flux thermique de la revendication 1. L'invention repose sur la réalisation, dans le substrat thermiquement conducteur du microcapteur, de caisson(s) poreux formant des zones de plus faible conductivité thermique qui permettent d'obtenir localement, au niveau des thermojonctions de la thermopile positionnées au droit d'un caisson poreux, une déviation et constriction des lignes de flux thermique qui sont orientées perpendiculairement au plan de la thermopile planaire du microcapteur.

Des caractéristiques plus particulières et préférentielles du microcapteur de l'invention sont en outre définies dans les revendications dépendantes 2 à 12.

### Brève description des figures

Les caractéristiques et/ou avantages de l'invention apparaîtront plus clairement à la lecture de la description détaillée ci-après de plusieurs variantes préférées de réalisation d'un microcapteur de l'invention. Cette description détaillée est donnée à titre d'exemple non limitatif et non exhaustif de l'invention, et en référence aux dessins annexés sur lesquels :

- la figure 1 est une vue éclatée d'une première variante de réalisation (simple déflection de flux) d'un microcapteur de l'invention permettant la mesure d'un flux thermique total
- la figure 2 est une vue en coupe du microcapteur de la figure 1 selon le plan de coupe II-II,
- la figure 3 représente de manière schématique une utilisation du microcapteur des figures 1 et 2 pour la mesure d'un flux thermique échangé entre deux systèmes,
- la figure 4 est une vue éclatée d'une deuxième variante de réalisation (double déflection de flux) d'un microcapteur de l'invention permettant la mesure d'un flux thermique total,
- la figure 5 est une vue en coupe du capteur de la figure 4 selon le plan de coupe V-V,
- la figure 6 est une vue éclatée d'une première variante de réalisation d'un microcapteur de l'invention permettant la mesure d'un rayonnement,
- la figure 7 est une vue en coupe du microcapteur selon le plan de coupe VII-VII de la figure 6,
- la figure 8 représente de manière schématique une utilisation du microcapteur des figures 6 et 7 pour la mesure d'un rayonnement éclairant une paroi de référence,
- la figure 9 est une vue éclatée d'une deuxième variante de réalisation d'un microcapteur de l'invention permettant la mesure rayonnement,
- la figure 10 est une vue en coupe selon le plan de coupe X-X du microcapteur de la figure 9,
- la figure 11 est une courbe représentant la porosité du silicium poreux dopé $p^+$ en fonction de la densité de courant dans un bain électrolytique comportant 25% d'HF et 50% d'éthanol, et
- la figure 12 est constituée de courbes représentant la porosité du silicium poreux dopé $p^+$ en fonction de la concentration en HF du bain électrolytique pour différentes densités (J) de courant.

### Description détaillée

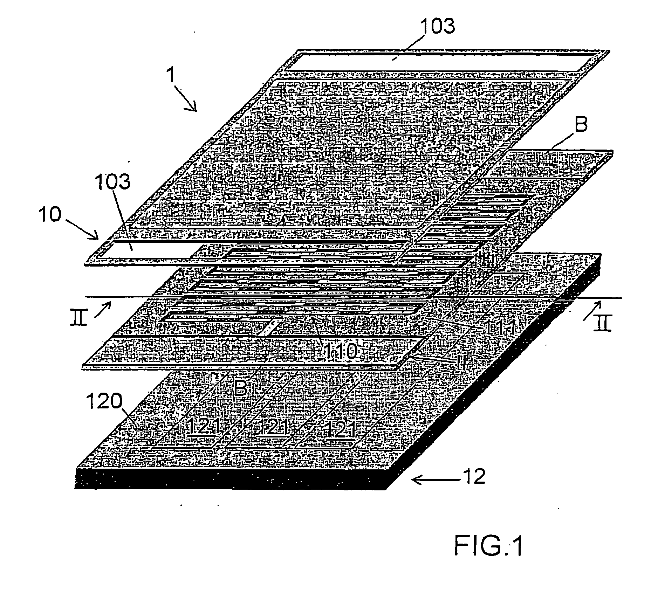

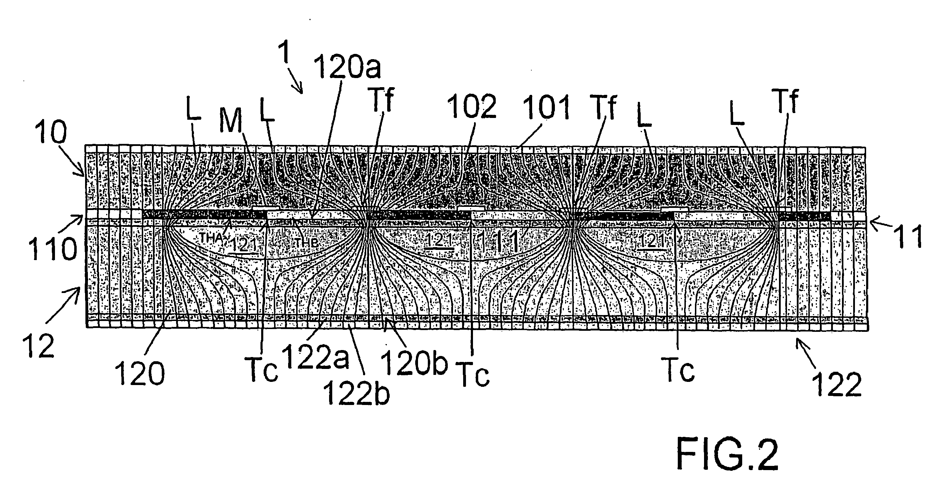

On a représenté sur les figures 1 et 2, une première variante de réalisation d'un microcapteur 1 de l'invention permettant la mesure d'un flux thermique total $\Phi$.

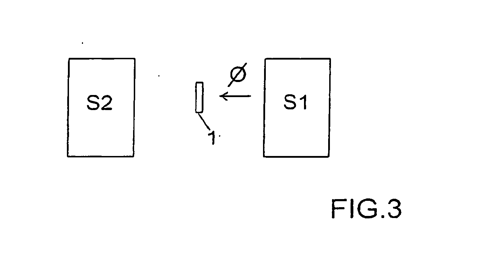

En référence à la figure 3, ce microcapteur 1 de flux thermique total permet de détecter trois types de transfert thermique (conduction thermique et/ou convection thermique et/ou rayonnement thermique) entre deux systèmes S1 et S2 entre lesquels il est interposé, et délivre un signal électrique qui est fonction de la grandeur du flux thermique $\Phi$ détecté. En fonction de l'application, le système S1 ou S2 peut être un fluide (gaz ou liquide) ou un solide ; le microcapteur 1 peut être en contact avec le système S1 et/ou le système S2, ou peut être distant de l'un et/ou l'autre des deux systèmes S1, S2.

En référence aux figures 1 et 2, le microcapteur 1 de l'invention comporte une structure plate de faible épaisseur composée essentiellement de trois parois superposées :

- une paroi collectrice 10,
- une paroi 12 formant un substrat de référence,
- une paroi 11 détectrice du flux thermique qui est constituée d'une thermopile planaire 110 à thermojonctions (Tf, Tc) distribuées déposées à la surface d'une couche 111 de matériau formant un isolant électrique [par exemple $SiO_2$, $SiN_xO_y$ (notamment $SiN_4$)] ; cette paroi 11 détectrice est interposée entre les deux parois 10 et 12.

La paroi collectrice 10 a pour fonction de collecter le flux thermique et de le répartir sur toute la surface de la thermopile 110 en sorte d'uniformiser la température superficielle du capteur. Cette paroi collectrice 10 est réalisée dans une couche 101 de matériau de conductivité thermique très importante, et ayant de préférence une température d'exploitation maximale très élevée ; de préférence, le matériau de la couche collectrice 101 de la paroi collectrice 10 est un métal réfractaire tel que par exemple du tungstène. Cette couche collectrice 101 est déposée sur une couche 102 d'un matériau diélectrique formant un isolant électrique tel que par exemple du polyimide (pour des applications à basse température), $SiO_2$, $SiN_xO_y$ (notamment $SiN_4$), ladite couche isolante 102 étant interposée entre la thermopile 110 et la couche collectrice 101.

Pour une description détaillée de la thermopile planaire 110, l'homme du métier se référera à la description des thermopiles des réalisations décrites dans la demande de brevet français FR 2 781 931. Il sera brièvement rappelé que la thermopile 110 comporte essentiellement une piste thermoélectrique, qui dans les exemples illustrés est un élément linéaire en forme de serpentin constitué par des thermoéléments en série et alternés ThA et ThB. Selon le type de thermopile, les thermoéléments ThA et ThB peuvent être réalisés en matériau métallique ou semi-conducteur.

Dans l'exemple particulier des figures 1 et 2, les thermoéléments ThA sont par exemple en polysilicium dopé négativement, et les thermoéléments ThB sont en polysilicium dopé positivement. A la jonction entre deux thermoéléments ThA et ThB successifs est déposé un plot électriquement conducteur M, par exemple en métal et notamment en or, formant un pont ohmique entre deux thermoéléments ThA et ThB adjacents. Ce dépôt métallique M constitue avec les deux thermoéléments ThA et ThB associés une thermojonction Tf ou Tc.

Aux deux extrémités de la piste thermoélectrique en forme de serpentin sont déposés respectivement deux plots métalliques B (par exemple en or), et qui forment les deux bornes de mesure de la thermopile. Afin de permettre l'accès à ses deux bornes B, la paroi collectrice 10 comporte deux lumières 103 (figure 1) en vis-à-vis respectivement des deux bornes B.

L'invention n'est pas limitée à la mise en oeuvre d'une thermopile comportant une piste thermoélectrique en forme de serpentin.

Dans l'exemple particulier des figures 1 et 2, les thermoéléments ThA et ThB se touchent. Dans une autre variante, les thermoéléments ThA et ThB pourraient être espacés. Egalement les contacts ohmiques M, pourraient être intercalés sur le même plan entre deux thermoéléments ThA et ThB.

Dans d'autres variantes de réalisations de l'invention, la thermopile 110 peut être réalisée en mettant en oeuvre la technologie connue dite de « dépôts plaqués ». De manière connue en soi, conformément à cette technologie, on réalise dans un premier temps une piste thermoélectrique continue (en forme de serpentin ou autre) dans un premier matériau thermoélectrique destiné à constituer par exemple les thermoéléments ThA, et dans un deuxième temps on réalise à la surface et le long de cette piste thermoélectrique continue, une pluralité de dépôts d'un second matériau thermoélectrique présentant une conductivité électrique supérieure, en sorte de former les thermoéléments ThB. La technologie de dépôts plaqués permet avantageusement de simplifier la fabrication de la thermopile, et notamment de réduire le nombre d'étapes de fabrication.

Le substrat 12 du microcapteur est réalisé dans une couche 120 d'un matériau thermiquement conducteur, plus particulièrement dans un matériau semi-conducteur, et de préférence en silicium monocristallin. Dans cette couche 120 de matériau sont réalisés des caissons poreux 121 qui sont localisés au droit uniquement des thermojonctions Tc (c'est-à-dire au droit d'une thermojonction sur deux. Chaque caisson poreux 121 s'étend depuis la face avant 120a de la couche 120 orientée vers la thermopile 110. Dans l'exemple de réalisation illustré, les thermojonctions Tc son alignées, et le microcapteur comporte un caisson poreux 121 localisé au droit de chaque alignement de thermojonctions Tc.

Sur la face arrière 120b de la couche 120 est réalisé un blindage 122 arrière sous la forme d'une couche 122a d'un matériau diélectrique tel que par exemple du polyimide, du $SiO_2$, du $SiN_xO_y$ (notamment $SiN_4$)], ladite couche 112a étant recouverte d'une fine couche de métal 122b. Ce blindage 122 est important et a pour fonction d'uniformiser la température sur la face arrière du capteur, et ainsi de rendre la sensibilité du capteur indépendante de la nature du système (système S1 dans l'exemple de la figure 3) vers lequel est orienté le substrat 12 du capteur lors de la mesure. Ce blindage 122 permet également une isolation électrique du capteur par rapport à son environnement et une protection du capteur contre les ondes électromagnétiques.

Les caissons 121 de silicium poreux au droit des thermojonctions Tc forment dans le substrat 12 des zones de faible conductivité thermique, tandis que les zones 120 de substrat 12 non poreuses au droit des thermojonctions Tf présentent une conductivité thermique élevée.

En fonctionnement, lorsque le capteur est par exemple en contact avec une source chaude, la chaleur est collectée par la paroi collectrice 10, puis est évacuée par conduction par le substrat 12 à fonction de puits thermique. Cette dissipation se fait préférentiellement vers les zones 120 non poreuses du substrat 12 du fait de leur forte conductivité thermique Les zones poreuses 121 quant à elles évacuent comparativement très peu de chaleur. En fonctionnement, on obtient ainsi localement, au droit des thermojonctions chaudes (Tc) de la thermopile qui sont positionnées au droit d'un caisson poreux 121, une déviation et une constriction locales des lignes (L) de flux thermique qui sont orientées perpendiculairement au plan de la thermopile planaire du microcapteur (voir figure 2).

Ces contrastes d'évacuation dus au différentiel de conductivités thermiques dans le substrat 12 permettent de maintenir quasiment froide la température des thermojonctions Tf (thermojonctions froides) au niveau superficiel du substrat silicium, et au contraire l'isolation thermique des caissons poreux 121 entraîne un échauffement des thermojonctions Tc (thermojonctions chaudes). L'écart de température ainsi créé entre les thermojonctions froides Tf et chaudes Tc est sensiblement proportionnel à la résistance thermique du substrat 12 et au flux thermique de conduction dans le substrat 12. Du fait de ces gradients de températures générés entre les thermojonctions chaudes Tc et froides Tf, la thermopile 110 délivre à ses bornes B une tension de Seebeck ($V_{Seebeck}$), donnée par la formule :

$$V_{Seebeck} = N.\alpha.\Delta T$$

dans laquelle N est le nombre de thermoéléments associées en série, $\alpha$ le pouvoir thermoélectrique des thermoéléments, et $\Delta T$ le gradient de température généré.

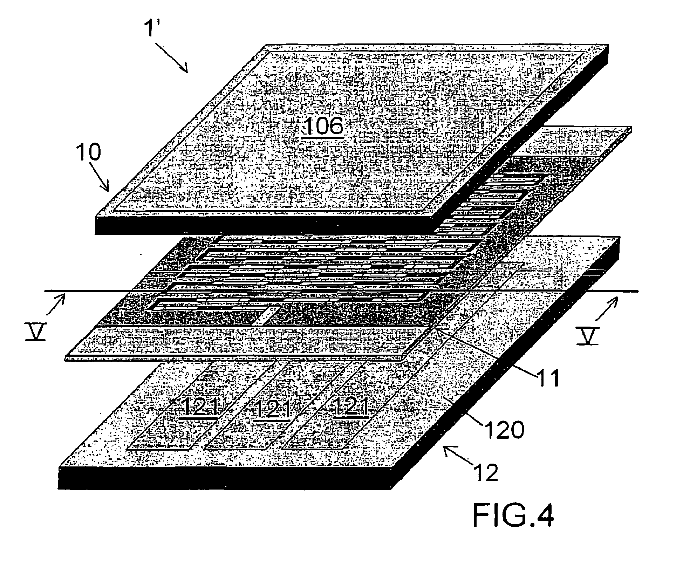

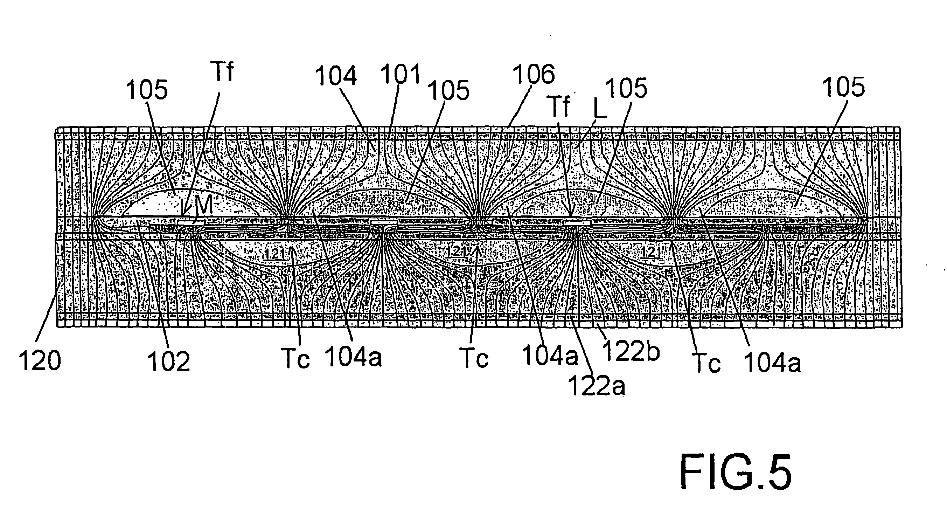

On a représenté sur les figures 4 et 5, une autre variante de réalisation d'un microcapteur 1', qui à la différence du microcapteur 1 des figures 1 et 2, permet une double déflection de flux (au lieu d'une simple déflection de flux dans le cas du microcapteur 1 précédemment décrit).

Cette double déflection de flux est obtenue grâce à la mise en oeuvre d'une paroi collectrice 10 comportant une couche collectrice 101 (par exemple en métal réfractaire tel que du tungstène) qui est déposée sur une couche 104 de déflection de flux thermique qui est thermiquement conductrice (par exemple couche de silicium dopé ou couche métallique). Entre la thermopile 11 et la couche 104 est en outre interposée une couche 102 électriquement isolante, par exemple couche de $SiO_2$, couche de $SiN_xO_y$ (notamment $SiN_4$)], couche de polyimide, ou colle époxyde.

La couche 104 de déflection de flux thermique comporte des piliers 104a qui sont séparés par des zones 105 de plus faible conductivité thermique. Les zones 105 de plus faible conductivité thermique sont positionnées au droit et au dessus des thermojonctions froides Tf. Les piliers 104a sont positionnés au droit uniquement des thermojonctions chaudes Tc ; ils permettent de concentrer la chaleur collectée par la couche 101 vers les thermojonctions chaude Tc et évitent l'échauffement des thermojonctions froides Tf. Par exemple, lorsque la couche 104 est en silicium dopé, les zones 105 de plus faible conductivité thermique sont en silicium poreux ou sont constituées par des cavités contenant de l'air.

On obtient ainsi une double déflection du flux thermique, ce qui comparativement au microcapteur 1 à simple déviation de flux des figures 1 et 2, permet de générer des gradients de température plus élevés, et de ce fait permet d'augmenter la sensibilité et la précision du capteur. Il peut également être utilisé en microgénérateur électrique. En revanche, la résistance thermique du microcapteur 1' à double déflection du flux thermique est plus élevée que celle du microcapteur 1, ce qui limite la température maximale d'exploitation du capteur, la dissipation thermique se faisant moins facilement.

Dans la variante particulière de réalisation des figures 4 et 5, la paroi collectrice 10 comporte en outre une couche supérieure absorbante 106, dont le matériau absorbant est sélectionné en fonction de la gamme de longueurs d'onde du rayonnement que l'on souhaite détecter au moyen du capteur. Par exemple, pour une détection sélective du rayonnement UV, le matériau absorbant de la couche 106 est par exemple du cuivre ; pour une détection du rayonnement infrarouge, le matériau absorbant de la couche 106 est par exemple en polyimide. Pour une détection du rayonnement visible et infrarouge, le matériau absorbant de la couche 106 est par exemple une couche de peinture noire. Il est également possible de réaliser un capteur quasiment insensible au rayonnement, en remplaçant la couche absorbante 106 par une couche réflectrice apte à réfléchir le rayonnement que l'on ne souhaite pas détecter.

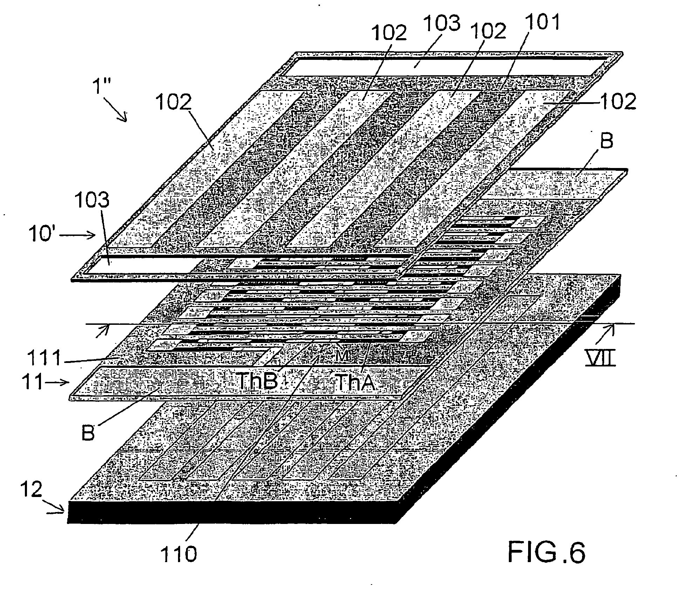

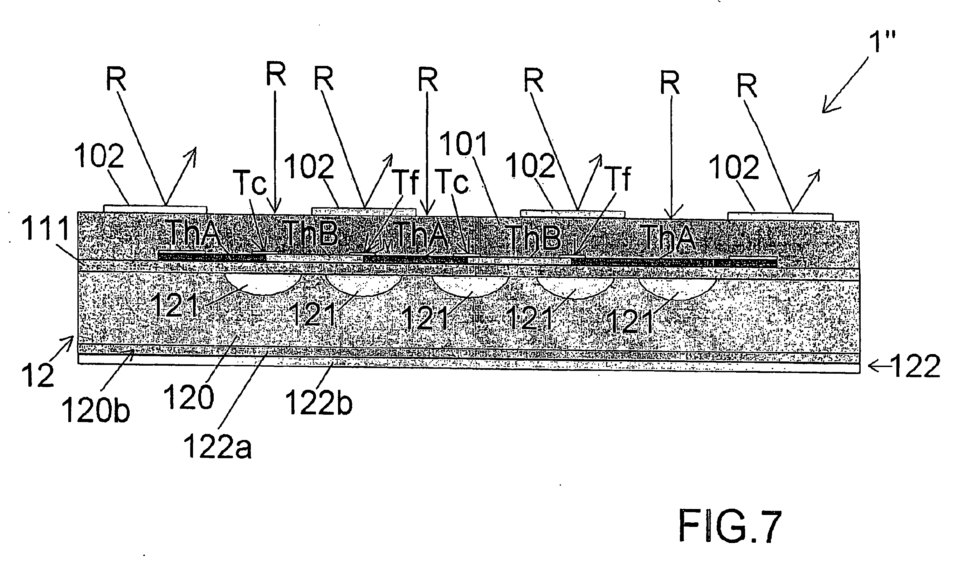

On représenté sur les figures 6 et 7, une première variante de réalisation d'un microcapteur radiatif 1" de l'invention pour la mesure d'un rayonnement R (par exemple rayonnement infrarouge).

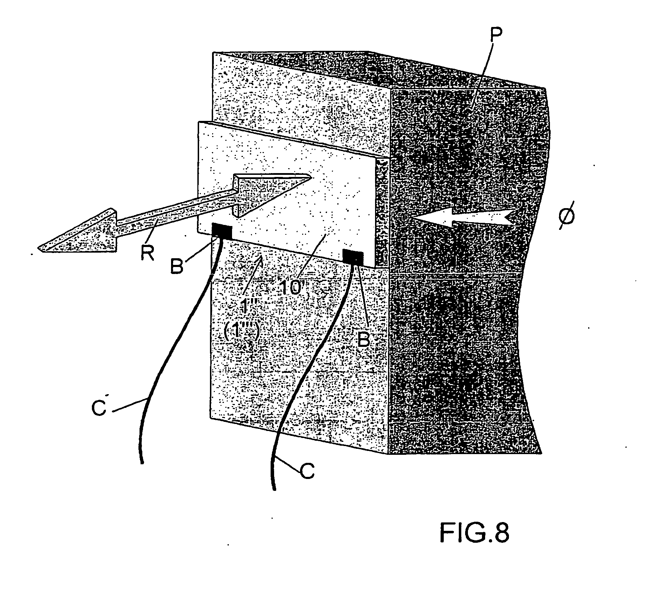

En référence à la figure 8, lorsqu'il est utilisé, ce microcapteur 1" est dans la plupart des cas au contact d'une paroi de référence P éclairée par le rayonnement R, et délivre un signal électrique (figure 8/ connexions électriques C) qui est fonction de la grandeur du flux thermique Φ détecté.

Le capteur radiatif 1" des figures 6 et 7 se différencie du capteur 1 des figures 1 et 2, par sa paroi collectrice 10' et par la répartition des caissons poreux 121 dans le substrat.

La paroi collectrice 10' est constituée d'une couche 101 d'un matériau ayant des propriétés d'absorption du rayonnement et sélectionné en fonction de la gamme de longueur d'ondes du rayonnement à mesurer, et de bande parallèles 102, qui sont réalisées dans un matériau sélectionné pour ses propriétés réfléchissante vis-à-vis du rayonnement à mesurer et qui sont disposées aux droit d'une thermojonction sur deux. Les thermojonctions Tc non recouvertes par une bande réfléchissante 102 forment les thermojonctions chaudes ; les thermojonctions Tf localisées au droit d'une bande réfléchissante 102 forment les thermojonctions froides. Pour la mesure d'un rayonnement infrarouge, le matériau absorbant de la couche 101 est par exemple du polyimide et le matériau constitutif des bandes réfléchissantes 102 est de l'or. Pour la mesure d'un rayonnement ultraviolet (UV), le matériau absorbant de la couche 101 est par exemple du cuivre et le matériau constitutif des bandes réfléchissantes 102 est par exemple de l'aluminium. Pour la mesure d'un rayonnement dans la gamme de longueur d'ondes du visible, on réalise par exemple des bandes 101 de peinture noire absorbante associées à des bandes 102 de peinture blanches réfléchissantes.

Les caissons poreux 121 dans le substrat 12 sont réalisés au droit de chaque thermojonction chaude Tc et de chaque thermojonction froide Tf et s'étendent depuis la face avant 120a du substrat 12 orientée vers la paroi détectrice 11. En particulier, dans l'exemple de réalisation illustré, les thermojonctions Tc et Tf sont agencées sous forme d'alignements parallèles, et le microcapteur comporte un caisson poreux 121 localisé au droit de chaque alignement de thermojonctions Tc et un caisson poreux localisé au droit de chaque alignement de thermojonctions Tf.

Comme pour les microcapteurs 1 et 1' des figures 1, 2 et 4, la structure poreuse des caissons 121 influe considérablement sur les propriétés thermiques du matériau. En particulier du fait de leur structure poreuse, les caissons 121 présentent une conductivité thermique très inférieure à la conductivité thermique du matériau non poreux 120, les caissons poreux 121 étant assimilables à des caissons thermiquement isolants.

Cette différence de conductivité thermique entre les caissons 121 de silicium poreux et le reste 120 du substrat non poreux permet d'obtenir la déviation et constriction des lignes de flux thermique dans le substrat 12, de manière comparable à ce qui a été décrit dans la demande de brevet français FR 2 781 931 avec la mise en oeuvre des cavités d'air gravées dans le substrat au droit des thermojonctions.

Cette déviation et constriction des lignes de flux thermique dans le substrat permet en fonctionnement du capteur de générer une différence de température dans le plan de la thermopile planaire 110 entre les thermojonctions chaudes Tc (éclairées par le rayonnement) et les thermojonctions froides Tf.

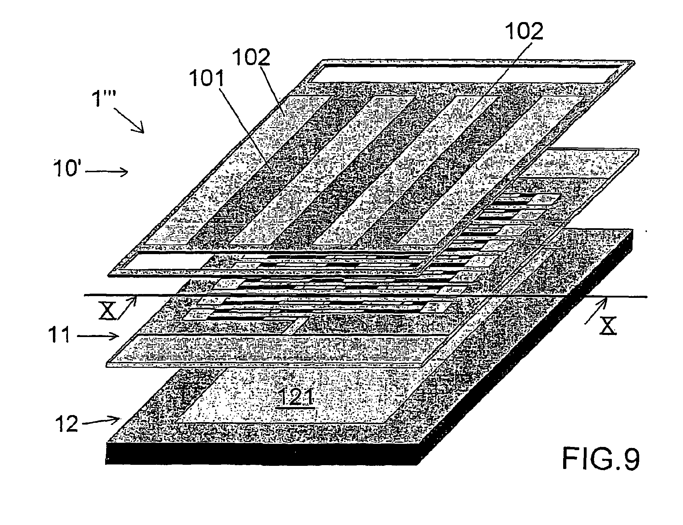

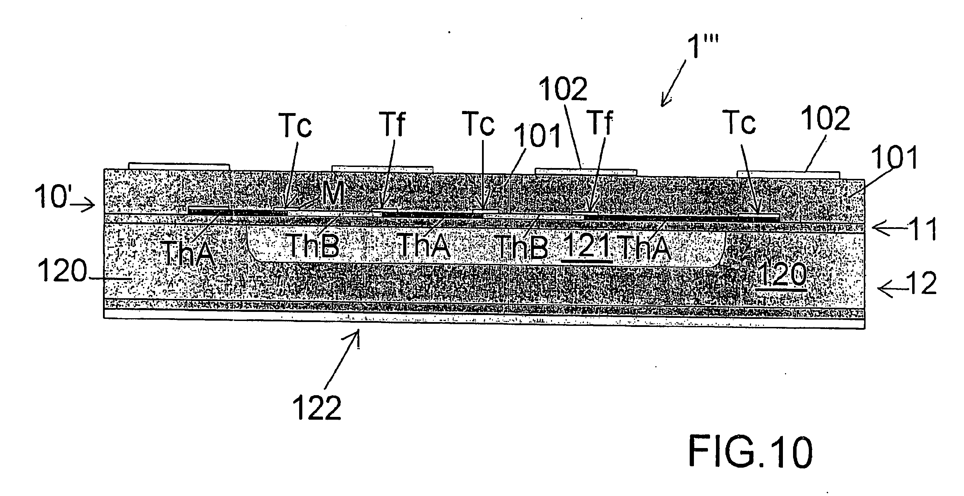

On représenté sur les figures 9 et 10, une deuxième variante de réalisation d'un microcapteur radiatif 1''' de l'invention pour la mesure d'un rayonnement R. Ce capteur radiatif 1''' se différencie du capteur 1" des figures 5 et 6 en ce que la pluralité de caissons poreux 121 de petite dimension a été remplacée par un unique caisson poreux 121 de plus grande dimension qui s'étend au droit de l'ensemble des thermojonctions chaudes Tc et froides Tf.

Plus particulièrement selon l'invention, quel que soit le type de microcapteur (capteur 1 ou 1' pour la mesure d'un flux thermique total ou capteur 1" ou 1''' pour la mesure d'un rayonnement), les caissons poreux 121 de silicium poreux ont de préférence une structure nanoporeuse ou mésoporeuse, constituée de longs pores parcourant perpendiculairement la surface du substrat et présentant de préférence des diamètres variant entre 10nm et 500nm.

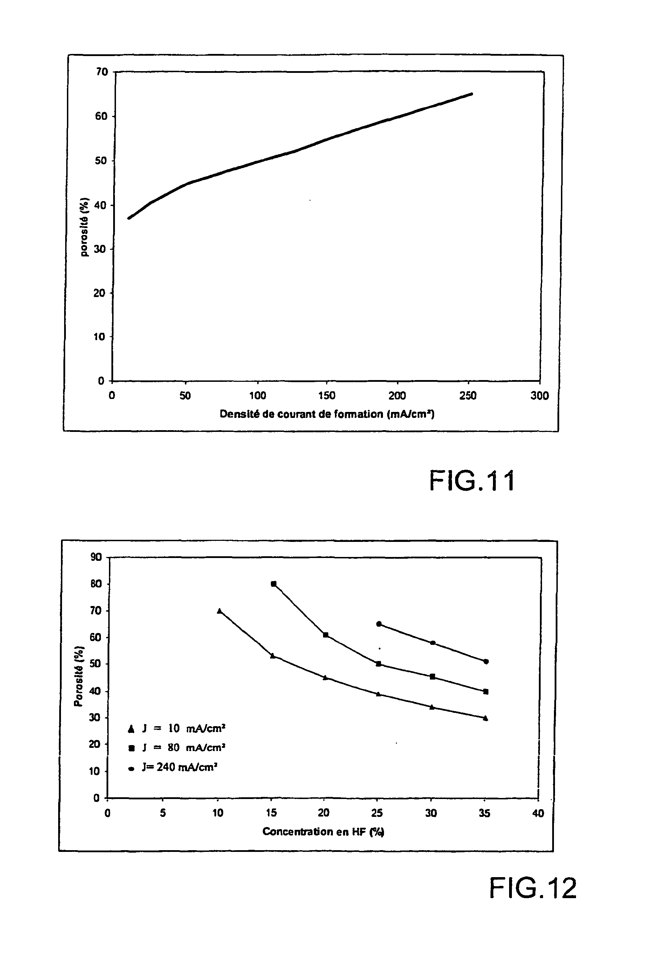

De préférence, les caissons 121 de silicium poreux sont obtenus par attaque anodique en milieu fluorhydrique concentré dans un bain électrolytique classique (eau/éthanol). Une tension continue est appliquée entre le substrat 12 constituant l'anode et la cathode métallique résistant à l'électrolyte (par exemple cathode en platine). La réaction électrolytique a lieu à densité de courant contrôlée, ce qui implique que les substrats 12 doivent de préférence être fortement dopés afin de présenter une résistance électrique suffisamment faible. Par exemple, mais de manière non limitative de l'invention, le substrat 12 est dans un matériau 120 constitué de silicium monocristallin dopée $p^+$ et présentant une résistivité inférieure à $0,01\Omega$cm. La porosité des caissons 121 formés dans le substrat (c'est-à-dire le pourcentage de silicium enlevé par le procédé électrolytique) croît avec la densité de courant (voir figure 11) et décroît quand la concentration d'acide fluorhydrique augmente (voir figure 12).

Le tableau I ci-après récapitule les caractéristiques de différents exemples d'électrolyses réalisées pour obtenir différentes valeurs de porosité.

Tableau I

| Durée d'électrolyse (mn) | Densité de courant utilisé (mA/cm²) | Concentration[(*)] en HF (%) | Concentration[(*)] en $H_2O$ (%) | Concentration[(*)] en Ethanol (%) | Porosité (%) |
|---|---|---|---|---|---|
| 140 | 100 | 23 | 44 | 33 | 60 |
| 140 | 50 | 23 | 44 | 33 | 40 |

(suite)

| Durée d'électrolyse (mn) | Densité de courant utilisé (mA/cm$^2$) | Concentration$^{(*)}$ en HF (%) | Concentration$^{(*)}$ en H$_2$O (%) | Concentration$^{(*)}$ en Ethanol (%) | Porosité (%) |
|---|---|---|---|---|---|
| 140 | 100 | 27 | 40 | 33 | 50 |
| 140 | 100 (pendant 120nm) et 50 (pendant 20mn) | 27 | 40 | 33 | 50 (sur une épaisseur de 240$\mu$m à 250 $\mu$m) et 40 (sur l'épaisseur restante de 30$\mu$m à 40$\mu$m) |
| (*) Dans le tableau, les concentrations sont exprimées en % volumique | | | | | |

Il revient à l'homme du métier de régler judicieusement les paramètres de l'électrolyse, et notamment la densité de courant et la concentration d'acide fluorhydrique dans le bain du procédé électrolytique, en sorte d'obtenir la porosité recherchée pour les caissons 121.

Dans le capteur monolithique de l'invention, et à la différence des microcapteurs décrits notamment dans la demande de brevet français FR 2 781 931, les couches du capteur au droit du ou des caissons poreux 121 ne forment pas des membranes suspendues au dessus d'une cavité vide mais sont supportées par les caissons poreux 121. Il en résulte une robustesse nettement améliorée pour le capteur, celui-ci pouvant subir des contraintes mécaniques, notamment de pression, nettement plus élevées, et/ou pouvant le cas échéant fonctionner dans des gammes de températures élevées (supérieure à 150°C).

En particulier, dans le cas d'un microcapteur radiatif 1" ou 1''', du fait de la robustesse mécanique obtenue, il n'est pas nécessaire d'encapsuler le microcapteur radiatif 1 dans un boîtier avec fenêtre transparente au rayonnement R. En outre, ce microcapteur peut avantageusement être facilement nettoyé sans prendre de précaution particulière, en sorte de retirer les poussières qui peuvent se déposer à sa surface, et qui nuisent à la qualité de la mesure.

Egalement, on notera que dans le microcapteur radiatif 1" ou 1''' de l'invention, la principale limite haute en température dépend à présent du matériau utilisé pour les bandes absorbantes 101. A titre indicatif, dans le cas de bandes absorbantes 101 en polyimide, cette limite en température est de l'ordre de 400°C. Pour le microcapteur 1 ou 1' de flux total la limite haute en température est de l'ordre de 800°C.

La valeur de conductivité thermique des caissons poreux 121 est corrélée à la porosité. Pour une meilleure sensibilité du microcapteur de flux thermique, il est préférable que la conductivité thermique des caisson 121 soit la plus faible possible, et incidemment que la porosité des caissons 121 soit la plus élevée possible. Néanmoins, plus la porosité des caissons 121 est élevée, plus la robustesse du capteur est diminuée.

Il revient ainsi à l'homme du métier de choisir le meilleur compromis pour la porosité des caissons 121 entre la sensibilité et la robustesse souhaitées pour le microcapteur de flux thermique. En pratique, la porosité des caissons 121 de silicium poreux sera fixée entre 30% et 70%. Une méthode connue de l'homme de l'art pour mesurer la porosité consiste à peser le matériau sur une microbalance avant et après traitement afin de déduire la variation de masse et incidemment le pourcentage de porosité.

A titre indicatif, une porosité de l'ordre de 70% des caissons 121 de silicium poreux correspond à une conductivité thermique ($\lambda$) de l'ordre de 1W/m.K des caissons 121. Comparativement, la couche 120 de silicium monocristallin non poreux présente une conductivité thermique ($\lambda$) de l'ordre de 140W/m.K.

Pour fabriquer le capteur de l'invention, on réalise dans un premier temps le substrat 12 avec caisson(s) poreux 121, et on réalise dans un deuxième temps par des procédés traditionnels de dépôts en couche mince sur ce substrat, la paroi détectrice 11 et la paroi collectrice 10 ou 10' et le blindage thermique 122 en face arrière. Le procédé de fabrication du substrat 12 avec caisson poreux 121 par attaque anodique en milieu fluorhydrique concentré dans un bain électrolytique classique (eau/éthanol) est avantageusement compatible avec les technologies CMOS de dépôts en couche mince, et surtout permet à l'échelle industrielle d'obtenir une meilleur reproductibilité (plus faible dispersion des caractéristiques des capteurs) et est plus facile à mettre en oeuvre que le procédé de gravure en face arrière du substrat silicium qui est décrit dans la demande de brevet FR 2 781 931 pour réaliser les cavité vides.

En complément de ce qui vient d'être décrit, le microcapteur de flux thermique de l'invention présente les avantages supplémentaires suivants :

- il est miniature, plat, de faible épaisseur, et présente une résistance thermique (dans le sens de son épaisseur) très faible, ce qui permet d'une part de réaliser des mesures de flux thermique à des températures très élevées, et d'autre part d'avoir une très bonne sensibilité pour la mesure (temps de réponse très faible) ; cette très faible résistance thermique est importante au regard du fonctionnement du capteur pour la mesure de flux, car il est essentiel que la chaleur collectée par la paroi collectrice 10 ou 10' du capteur puisse être dissipée et évacuée le plus rapidement possible vers le substrat 12 ;

- il est autocalibré et offre une grande précision de mesure et une très bonne en fiabilité de mesure ;
- il permet d'obtenir une grande dynamique de mesure ;
- il est actif et ne nécessite aucune alimentation ;
- sa topologie est souple et permet facilement d'adapter à chaque application la sensibilité du capteur en adaptant sa forme, sa surface et le nombre de thermojonctions Tc, Tf de la thermopile et de caisson(s) poreux 121 associé (s), en fonction de la sensibilité recherchée.

Les microcapteurs de l'invention permettant la mesure de flux thermique total trouvent de nombreuses applications, parmi lesquels on peut citer de manière non exhaustive et à titre d'exemples non limitatifs de l'invention :

- la détection de présence humaine par contact ;
- la fabrication de commutateurs déclenchés par la chaleur ;
- la mesure de flux de chaleur latente d'évaporation ;
- la détection d'échauffements anormaux ;
- la caractérisation d'éléments ou systèmes susceptibles de subir de fortes pressions, tels que par exemple des explosifs ;
- la mesure de flux thermique à de hautes températures supérieures 150°c et de préférence supérieures à 600°C.

Les microcapteurs de l'invention permettant la mesure de flux thermique radiatif trouvent de nombreuses applications, parmi lesquels on peut citer de manière non exhaustive et à titre d'exemples non limitatifs de l'invention :

- mesure de température à distance et sans contact ;
- détection de présence humaine sans contact ;
- en association avec un système optique adapté (lentille ou parabole), détection de chaleur sans contact et à longue distance.

L'invention n'est pas limitée à des microcapteurs sur substrat 120 en silicium dopé $P^+$. En particulier, le substrat conducteur 120 comportant les cavités poreuses 121 peut être en silicium dopé $N^+$, ou en silicium dopé $P^-$ ou $N^-$.

## Revendications

1.   Microcapteur (1 ;1' ; 1" ; 1''') de flux thermique comportant une paroi collectrice (10 ; 10') thermiquement conductrice ayant pour fonction de collecter un flux thermique, un substrat (12) thermiquement conducteur formant un puits thermique, et au moins une thermopile planaire (110) à thermojonctions distribuées (Tf, Tc) qui est interposée entre la paroi collectrice et le substrat, **caractérisé en ce que** le substrat (12) comporte au moins un caisson poreux (121) formant une zone de plus faible conductivité thermique qui permet d'obtenir localement une déviation et construction des lignes de flux thermique au niveau de la ou des thermojonctions positionnées au droit dudit au moins un caisson poreux.

2.   Microcapteur (1; 1') selon la revendication 1, **caractérisé en ce qu'**il comporte une pluralité de caissons poreux qui sont localisés respectivement au droit d'une thermojonction sur deux thermojonctions chaudes (Tc).

3.   Microcapteur (1; 1') selon la revendication 2 **caractérisé en ce que** la paroi collectrice (10) comporte au moins une couche collectrice (101) en métal, et de préférence en métal réfractaire.

4.   Microcapteur (1') selon la revendication 1 ou 2 **caractérisé en ce que** la paroi collectrice (10) comporte d'un part une couche (104) de déflection de flux thermique, ladite couche (104) formant des piliers (104a) thermiquement conducteurs localisés au droit des thermojonctions chaudes (Tc), et d'autre part des zones (105) présentant une conductivité thermique inférieure à celle des piliers (104a) et localisées au droit des thermojonctions froides (Tf).

5.   Microcapteur (1 ") selon la revendication 1 pour la mesure d'un flux thermique radiatif, **caractérisé en ce qu'**il comporte une pluralité de caissons poreux (121) qui sont localisés respectivement au droit de chaque thermojonction (Tc, Tf).

6. Microcapteur (1''') selon la revendication 1 pour la mesure d'un flux thermique radiatif, **caractérisé en ce qu'**il comporte un unique caisson poreux (121) qui est localisé au droit de l'ensemble des thermojonctions (Tc, Tf).

7. Microcapteur (1'' ; 1''') selon la revendication 5 ou 6 **caractérisé en ce que** la paroi collectrice (10') comporte une couche (101) de matériau absorbant le rayonnement (R) à détecter, et à la surface de cette couche absorbante (101), des zones (102) superficielles qui sont aptes à réfléchir ledit rayonnement (R) et qui sont localisées au droit d'une thermojonction sur deux thermojonctions froides (Tf).

8. Microcapteur selon l'une des revendications 1 à 7, **caractérisé en ce que** chaque caisson poreux (121) s'étend depuis la face (120a) du substrat orientée vers la thermopile (110).

9. Microcapteur selon l'une des revendications 1 à 8 **caractérisé en ce que** le substrat est en silicium.

10. Microcapteur selon la revendication 9 **caractérisé en ce que** le substrat est choisi parmi les matériaux de la liste suivante : silicium dopé $P^+$ ; silicium dopé $N^+$, silicium dopé $N^-$ ; silicium dopé $P^-$.

11. Microcapteur selon l'une des revendications 1 à 10, **caractérisé en ce que** chaque caisson poreux (121) présente une porosité comprise entre 30% et 70%.

12. Microcapteur selon l'une des revendications 1 à 11, **caractérisé en ce que** chaque caisson poreux (121) présente une conductivité thermique inférieure à 1W/m.K.

**Claims**

1. Heat flow microsensor (1; 1'; 1 "; 1 ''') including a collector wall (10; 10'), which is thermally conductive and used for collecting a heat flow, a substrate (12), which is thermally conductive and forms a heat sink, and at least one planar thermopile (110) with distributed thermal junctions (Tf, Tc) arranged between the collector wall and the substrate, **characterised in that** the substrate (12) includes at least one porous casing (121), which forms a zone of lower heat conductivity enabling a deviation and constriction of the heat flow lines to be locally obtained at the level of the thermal junction(s) positioned perpendicular to said at least one porous casing.

2. Microsensor (1; 1') according to claim 1, **characterised in that** it includes a plurality of porous casings, which are located perpendicular to a thermal junction on two hot thermal junctions (Tc), respectively.

3. Microsensor (1; 1') according to claim 2, **characterised in that** the collector wall (10) includes at least one collector layer (101) made of metal, and preferably refractory metal.

4. Microsensor (1') according to claim 1 or 2, **characterised in that** the collector wall (10) includes on the one hand a heat flow deflection layer (104), said layer (104) forming localised thermally conductive pillars (104a) perpendicular to the hot thermal junctions (Tc), and on the other hand zones (105) with a heat conductivity lower than that of the pillars (104a) and located perpendicular to the cold thermal junctions (Tf).

5. Microsensor (1") according to claim 1 for measuring a radiative heat flow, **characterised in that** it includes a plurality of porous casings (121), which are located perpendicular to each thermal junction (Tc, Tf), respectively.

6. Microsensor (1''') according to claim 1 for measuring a radiative heat flow, **characterised in that** it includes a single porous casing (121), which is located perpendicular to the ensemble of thermal junctions (Tc, Tf).

7. Microsensor (1"; 1"') according to claim 5 or 6, **characterised in that** the collector wall (10') includes a layer (101) of material absorbing the radiation (R) to be detected and, at the surface of this absorbing layer (101), superficial zones (102), which are suitable for reflecting said radiation (R) and which are located perpendicular to a thermal junction on two cold thermal junctions (Tf).

8. Microsensor according to one of claims 1 to 7, **characterised in that** each porous casing (121) extends from the face (120a) of the substrate oriented towards the thermopile (110).

9. Microsensor according to one of claims 1 to 8, **characterised in that** the substrate is of silicone.

**10.** Microsensor according to claim 9, **characterised in that** the substrate is chosen from the materials of the following list: doped silicon P$^+$; doped silicon N$^+$, doped silicon N$^-$; doped silicon P$^-$.

**11.** Microsensor according to one of claims 1 to 10, **characterised in that** each porous casing (121) has a porosity comprised between 30% and 70%.

**12.** Microsensor according to one of claims 1 to 11, **characterised in that** each porous casing (121) has a heat conductivity lower than 1W/m.K.

**Patentansprüche**

**1.** Wärmefluss-Mikrosensor (1; 1'; 1"; 1''') mit einer wärmeleitenden Erfassungswand (10;10'), deren Aufgabe darin besteht, einen Wärmefluss zu erfassen, mit einem wärmeleitenden Substrat (12), das eine Wärmesenke bildet, sowie mit zumindest einer flachen Thermosäule (110), die verteilt angeordnete Thermoverbindungen (Tf, Tc) aufweist und zwischen Erfassungswand und Substrat eingesetzt ist, **dadurch gekennzeichnet, dass** das Substrat (12) zumindest eine poröse Kammer (121) aufweist, die einen Abschnitt geringerer Wärmeleitfähigkeit bildet, mit dem es möglich ist, bereichsweise eine Ablenkung und Einschnürung der Wärmeflusslinien im Bereich der Thermoverbindung(en) zu erhalten, die bei der zumindest einen porösen Kammer positioniert sind.

**2.** Mikrosensor (1;1') nach Anspruch 1, **dadurch gekennzeichnet, dass** er eine Mehrzahl von porösen Kammern aufweist, die jeweils im Bereich einer jeden zweiten warmen Thermoverbindung (Tc) liegen.

**3.** Mikrosensor (1; 1') nach Anspruch 2, **dadurch gekennzeichnet, dass** die Erfassungswand (10) zumindest eine Erfassungsschicht (101) aus Metall, vorzugsweise aus hitzebeständigem Metall, aufweist.

**4.** Mikrosensor (1') nach Anspruch 1 oder 2, **dadurch gekennzeichnet, dass** die Erfassungswand (10) einerseits eine Ablenkschicht (104) zur Ablenkung des Wärmeflusses aufweist, wobei die Schicht (104) wärmeleitende Pfeiler (104a) bildet, die im Bereich der warmen Thermoverbindungen (Tc) liegen, sowie andererseits Abschnitte (105), deren Wärmeleitfähigkeit geringer als die der Pfeiler (104a) ist und die im Bereich der kalten Thermoverbindungen (Tf) liegen.

**5.** Mikrosensor (1") nach Anspruch 1 zum Messen eines Strahlungs-Wärmeflusses, **dadurch gekennzeichnet, dass** er eine Mehrzahl von porösen Kammern (121) aufweist, die im Bereich einer jeden Thermoverbindung (Tc, Tf) liegen.

**6.** Mikrosensor (1''') nach Anspruch 1 zum Messen eines Strahlungs-Wärmeflusses, **dadurch gekennzeichnet, dass** er eine einzige poröse Kammer (121) aufweist, die im Bereich der gesamten Thermoverbindungen (Tc, Tf) liegt.

**7.** Mikrosensor (1"; 1''') nach Anspruch 5 oder 6, **dadurch gekennzeichnet, dass** die Erfassungswand (10') eine Schicht (101) aus - die zu ermittelnde Strahlung (R) absorbierendem - Material enthält und an der Oberfläche dieser absorbierenden Schicht (101) Oberflächenabschnitte (102) aufweist, welche angepasst sind, die Strahlung (R) zu reflektieren und die im Bereich einer jeden zweiten kalten Thermoverbindung (Tf) liegen.

**8.** Mikrosensor nach einem der Ansprüche 1 bis 7, **dadurch gekennzeichnet, dass** jede poröse Kammer (121) sich von einer - der Thermosäule (110) zugewandten - Seite (120a) des Substrats ausgehend erstreckt.

**9.** Mikrosensor nach einem der Ansprüche 1 bis 8, **dadurch gekennzeichnet, dass** das Substrat aus Silizium besteht.

**10.** Mikrosensor nach Anspruch 9, **dadurch gekennzeichnet, dass** das Substrat ausgewählt ist aus folgender Auflistung: P$^+$ dotiertes Silizium, N$^+$ dotiertes Silizium, N$^-$ dotiertes Silizium, P$^-$ dotiertes Silizium.

**11.** Mikrosensor nach einem der Ansprüche 1 bis 10, **dadurch gekennzeichnet, dass** jede poröse Kammer (121) eine Porosität zwischen 30% und 70% aufweist.

**12.** Mikrosensor nach einem der Ansprüche 1 bis 11, **dadurch gekennzeichnet, dass** jede poröse Kammer (121) eine Wärmeleitfähigkeit von unter 1 W/m*K. aufweist.

FIG.1

FIG.2

EP 1 767 913 B1

FIG.3

FIG.4

FIG.5

EP 1 767 913 B1

FIG.6

FIG.7

EP 1 767 913 B1

FIG.8

FIG.9

Tc        Tf        Tc        Tf        1'''        Tc        102
                              101                          101

10'→    M

ThA        ThB        ThA        ThB   121 ThA              120

←11

120        122                                              ←12

FIG.10

FIG.11

FIG.12

**EP 1 767 913 B1**

**RÉFÉRENCES CITÉES DANS LA DESCRIPTION**

**Documents brevets cités dans la description**

• FR 2781931